# FASCICULE DE BREVET EUROPEEN

(11) **EP 3 169 948 B1**
(45) Date de publication et mention de la délivrance du brevet: **06.06.2018**
(21) Numéro de dépôt: 15738370.4
(22) Date de dépôt: 16.07.2015
(51) Int. Cl.: F25B 39/04

(54) **BOUTEILLE DE CONDENSEUR ADAPTÉE POUR UNE UTILISATION DANS UN CIRCUIT DE CLIMATISATION, PLUS PARTICULIÈREMENT LE CIRCUIT DE CLIMATISATION D'UN VÉHICULE AUTOMOBILE**
KONDENSATOREMPFÄNGER ZUR VERWENDUNG IN EINEM KLIMATISIERUNGSKREISLAUF, INSBESONDERE DES KLIMATISIERUNGSKREISLAUFS EINES KRAFTFAHRZEUGS
CONDENSER RECEIVER ADAPTED FOR USE IN AN AIR-CONDITIONING CIRCUIT, MORE SPECIFICALLY THE AIR-CONDITIONING CIRCUIT OF A MOTOR VEHICLE

(30) Priorité: 16.07.2014 FR 1456823
(43) Date de publication de la demande: 24.05.2017
(73) Titulaire: Valeo Systemes Thermiques, 78321 Le Mesnil-Saint-Denis (FR)
(72) Inventeur: AZZOUZ, Kamel, F-75012 Paris (FR); SZOSTEK, Dawid, F-78000 Versailles (FR)
(74) Mandataire: Neuviale, Bertrand
(86) Numéro de dépôt international: PCT/EP2015/066349
(87) Numéro de publication internationale: WO 2016/009013

(56) Documents cités:
- WO-A1-2014/044522
- JP-A- 2000 257 989
- US-A1- 2013 284 400

## Description

### Domaine de l'invention

La présente invention concerne une bouteille de condenseur utilisée pour un circuit de climatisation, par exemple le circuit de climatisation d'un véhicule automobile. Plus précisément, la présente invention concerne une bouteille de condenseur permettant d'améliorer le procédé pour refroidir un liquide utilisé dans la boucle froide du système de climatisation. L'état de la technique le plus proche de l'objet de la revendication 1 est montré dans le document WO 2014/044522, qui divulgue une bouteille de condenseur adaptée pour recevoir et contenir un fluide utilisé dans une boucle froide d'un système de climatisation, la bouteille de condenseur comprenant une paroi délimitant un espace intérieur pour contenir le fluide.

### Etat de la technique

L'utilisation d'un système de climatisation est connue dans le domaine de l'industrie automobile. Un système de climatisation permet d'améliorer, de manière significative, le confort dans l'habitacle d'un véhicule automobile. Le système de climatisation peut être utilisé pour réguler la température à l'intérieur de l'habitacle du véhicule automobile et pour déshydrater l'air ambiant à l'intérieur dudit véhicule automobile. Le système de climatisation peut donc être utilisé, notamment, dans le but d'éviter la formation de buée sur les parois intérieures des vitres d'un véhicule automobile.

Dans une boucle froide, généralement utilisée dans un système de climatisation, les étapes d'évaporation, de compression, de condensation et d'expansion se succèdent en utilisant un fluide adapté tel qu'un fluide de type R134 ou 1234YF. Après l'étape de condensation, le fluide est maintenu dans un état liquide à l'intérieur d'un réservoir. Ce réservoir peut être intégré dans un condenseur ou peut être isolé et connecté à la sortie dudit condenseur.

Lors de la condensation du fluide dans le condenseur, ledit fluide circule, à une température de saturation dudit fluide, vers un réservoir tel qu'une bouteille de condenseur. Une bouteille de condenseur a pour fonction de séparer les phases liquide et gaz d'un fluide afin de laisser sortir uniquement le fluide dans son état liquide. Simultanément, la bouteille de condenseur peut être utilisée dans le but de sous-refroidir le fluide, c'est-à-dire d'abaisser la température du fluide, utilisé dans la boucle froide, en dessous de la température de saturation correspondant à la pression de condensation définie.

Ce processus de sous-refroidissement est un procédé connu dans l'art antérieur pour un système de refroidissement par compression. L'effet technique de ce procédé réside dans l'amélioration de l'efficacité dudit système de refroidissement par compression grâce à la modification de l'enthalpie du fluide utilisé dans la boucle froide.

Selon l'art antérieur, la bouteille de condenseur a pour première fonction de maintenir le fluide utilisé dans la boucle froide. Une fonctionnalité additionnelle consiste, par exemple, à absorber l'humidité grâce à la présence d'un matériau tel qu'un gel adapté. La bouteille de condenseur peut également servir à filtrer le fluide présent dans la boucle froide, évitant ainsi aux particules, présentant une dimension supérieure à une valeur seuil déterminée, de circuler au sein du système de climatisation.

Selon l'art antérieur, la fonction de sous-refroidissement du fluide présent au sein d'une bouteille de condenseur n'est pas optimisée.

Il apparaît que des modifications, permettant d'améliorer la fonction de sous-refroidissement du fluide présent à l'intérieur d'une bouteille de condenseur, s'avèrent nécessaires pour optimiser l'efficacité du système de climatisation.

### Objet de l'invention

La présente invention concerne une bouteille de condenseur visant à améliorer les possibilités de sous-refroidir le fluide présent à l'intérieur de la boucle froide d'un système de climatisation.

A cet effet, la présente invention concerne une bouteille de condenseur adaptée pour recevoir et contenir un fluide utilisé dans une boucle froide d'un système de climatisation, la bouteille de condenseur comprenant une paroi extérieure et une paroi intérieure, lesdites parois extérieure et intérieure délimitant un espace intermédiaire, ladite paroi intérieure délimitant un espace intérieur pour contenir le fluide, ledit espace intermédiaire comprenant un composant statique adapté pour stocker et libérer une quantité déterminée de chaleur afin de permettre un échange de chaleur entre le composant statique et le fluide contenu dans l'espace intérieur.

Selon un mode de réalisation de la présente invention, le composant statique comprend un matériau à changement de phase (MCP).

Selon un mode de réalisation de la présente invention, la température de changement de phase du matériau à changement de phase (MCP) est comprise entre 45 et 55°C.

Selon un mode de réalisation de la présente invention, le composant statique comprend un liquide.

Selon un mode de réalisation de la présente invention, le composant statique comprend du graphite.

Selon un mode de réalisation de la présente invention, la paroi extérieure de ladite bouteille de condenseur est pourvue d'une pluralité de nervures adaptées pour augmenter la surface de la paroi extérieure de la bouteille de condenseur.

### Brève descriptions des dessins

Les but, objet et caractéristiques de la présente invention ainsi que ses avantages apparaîtront plus clairement à la lecture de la description ci-dessous, des modes de réalisation préférés d'une bouteille de condenseur selon l'invention, faite en référence aux dessins dans lesquels :
- la figure 1 montre une vue en perspective d'une bouteille de condenseur selon l'invention,
- la figure 2 représente, en détail, l'extrémité supérieure de la bouteille de condenseur selon la figure 1,
- la figure 3 montre, de façon schématique et selon une vue en coupe, les différents éléments présents à l'intérieur de la bouteille de condenseur selon les figures 1 et 2, et
- la figure 4 représente un détail de l'extérieur de la bouteille de condenseur selon les figures 1 et 2.

### Description détaillée de l'invention

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

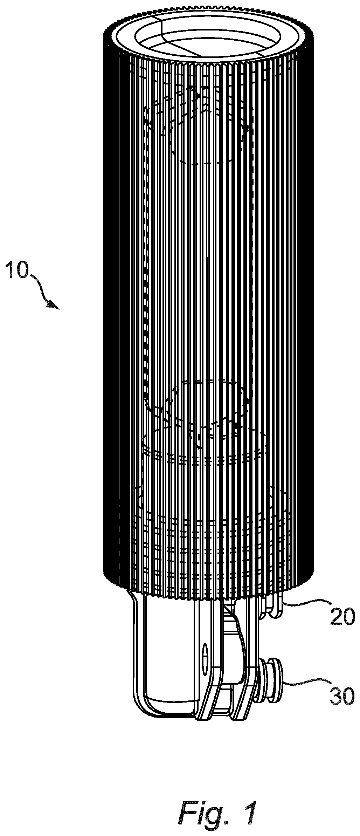

La figure 1 montre, en perspective, une bouteille de condenseur 10 selon la présente invention ladite bouteille pouvant être utilisée en combinaison avec un condenseur et étant adaptée pour retenir en son sein une quantité de fluide présent dans une boucle froide tel qu'un liquide de type R134 ou 1234YF.

Pour recevoir et laisser échapper le fluide, la bouteille de condenseur 10 est, en son extrémité inférieure, pourvue d'une entrée 20 et d'une sortie 30.

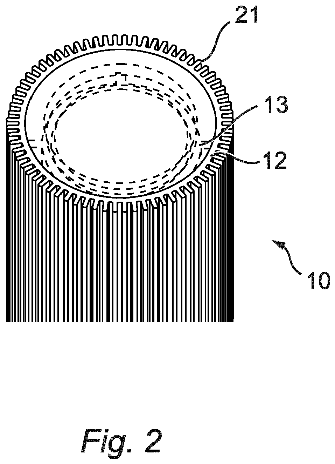

La figure 2 représente un détail de l'extrémité supérieure de la bouteille de condenseur 10 selon l'invention.

Comme montré sur la figure 2, la bouteille de condenseur 10 comprend une paroi extérieure 12 et une paroi intérieure 13. La paroi extérieure 12 de la bouteille de condenseur 10 est couverte d'un nombre déterminé de nervures 21 s'étendant dans une direction longitudinale sur ladite surface extérieure de la paroi extérieure 12. L'ensemble formé par les nervures 21 présentes à l'extérieur de la bouteille de condenseur 10 a pour effet d'augmenter la surface adaptée pour l'échange de chaleur avec l'air ambiant. En d'autres termes, l'échange de chaleur avec l'air ambiant autour de la bouteille de condenseur 10 est ainsi amélioré par rapport à l'échange de chaleur réalisé selon l'art antérieur avec des bouteilles de condenseur présentant une surface extérieure lisse.

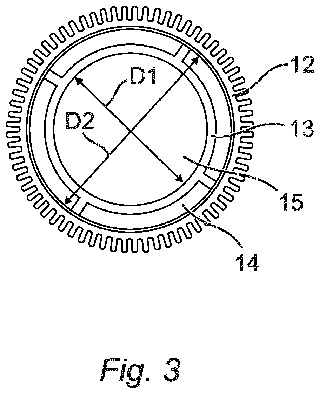

La figure 3 représente, de façon schématique et selon une vue en coupe, la bouteille de condenseur 10 selon les figures 1 et 2. La figure 3 montre les différentes nervures 21 visibles à l'extérieur de la paroi extérieure 12 de la bouteille de condenseur 10. La paroi extérieure 12 et la paroi intérieure 13 définissent un espace intermédiaire 14, situé entre la paroi extérieure 12 et la paroi intérieure 13. Ledit espace intermédiaire 14, selon l'invention, peut être utilisé pour contenir une quantité déterminée de matériau à changement de phase (MCP). Le volume disponible à l'intérieur de la paroi intérieure 13 définit un espace interne 15 afin de recevoir et maintenir une quantité de fluide utilisé dans la boucle froide.

La présence d'une quantité déterminée de matériau à changement de phase (MCP) présente plusieurs effets techniques. En effet, le matériau de type MCP est un matériau adapté pour stocker et libérer une quantité déterminée de chaleur. La présence de ce matériau entre la paroi extérieure 12 et la paroi intérieure 13 de la bouteille de condenseur 10 peut servir à stabiliser la température du liquide présent à l'intérieur de l'espace interne 15. Cette stabilité correspond à un premier effet technique positif sur l'efficacité du système de condensation dans lequel la bouteille de condenseur 10 est utilisée.

Comme montré sur la figure 2, la paroi extérieure 12 s'étend au-dessus de l'extrémité de la paroi intérieure 13, auprès de l'extrémité supérieure de la bouteille de condenseur 10. Cette particularité offre l'opportunité d'obturer l'extrémité supérieure de la bouteille de condenseur 10 à l'aide d'un bouchon unique couvrant l'intégralité des différents espaces disponibles à l'intérieur de la bouteille de condenseur 10.

Comme montré sur la figure 3, la bouteille de condenseur 10 a un diamètre extérieur D2. Le volume utile au maintien du fluide présent à l'intérieur de la boucle froide est défini à l'aide du diamètre intérieur D1. La valeur de D1 est comprise entre 25 et 65 mm. La valeur de D2 est telle que le ratio du diamètre intérieur D1 par rapport au diamètre extérieur D2 se situe, de préférence, entre 0 et 50%, en fonction de l'utilisation de la bouteille de condenseur 10 et de la stabilisation du fluide contenu à l'intérieur de l'espace interne 15.

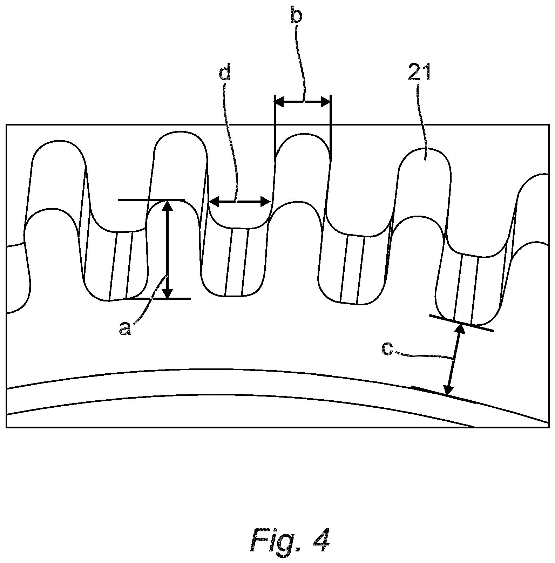

Sur la figure 4, les références « a », « b », « c » et « d » indiquent différentes caractéristiques relatives respectivement à la hauteur, à la largeur et à l'épaisseur d'une nervure 21 ainsi qu'à l'intervalle entre deux nervures 21. Ces différentes dimensions « a », « b », « c » et « d » sont définies en fonction de l'utilisation de l'utilisation de la bouteille de condenseur 10 sur laquelle les différentes nervures 21 sont présentes.

Ainsi, la valeur de la hauteur « a » des différentes nervures 21, selon la figure 4, se situe de préférence dans un intervalle de valeurs comprises entre 0 et 10 mm. La valeur de la largeur « b » des nervures 21, selon la figure 4, se situe de préférence dans un intervalle de valeurs comprises entre 0 et 10 mm. La valeur de l'épaisseur « c » se situe, de préférence, dans un intervalle de valeurs comprises entre 0,8 et 4 mm, de préférence entre 1 et 3 mm. La valeur de la distance « d » entre deux nervures adjacentes se situe, de préférence, dans un intervalle de valeurs comprises entre 0,2 et 10 mm.

Selon un mode de réalisation préféré de la présente invention, les différentes parois, telles que montrées sur une vue en coupe de la figure 3, sont obtenues grâce à un procédé d'extrusion. A l'exception de différentes connexions destinés à la bouteille de condenseur 10, la bouteille de condenseur 10 et les différents bouchons permettant d'obturer les extrémités sont obtenus à l'aide d'un procédé unique.

Selon un mode de réalisation préféré de la présente invention, l'extrémité supérieure de la bouteille de condenseur 10, telle que montrée sur la figure 2, et l'extrémité inférieure de la bouteille de condenseur 10 peuvent être obturées grâce à un bouchon, tel qu'un bouchon en plastique, en combinaison avec des anneaux en forme de « O ». Alternativement, les extrémités supérieure et inférieure peuvent être obturées à l'aide de bouchons en aluminium, en combinaison avec des anneaux en forme de « O ». Les extrémités supérieure et inférieure peuvent également être obturées grâce à un processus de brasage au cours duquel les bouchons sont brasés aux extrémités de la bouteille de condenseur 10.

Selon la présente invention, le matériau de type MCP utilisé pour remplir l'espace intermédiaire 14 peut être un matériau de type MCP pour lequel la température de changement de phase est comprise entre 45 et 55°C.

## Revendications

1. Bouteille de condenseur (10) adaptée pour recevoir et contenir un fluide utilisé dans une boucle froide d'un système de climatisation, la bouteille de condenseur (10) comprenant une paroi extérieure (12) et une paroi intérieure (13), lesdites parois extérieure (12) et intérieure (13) délimitant un espace intermédiaire (14), ladite paroi intérieure (13) délimitant un espace intérieur (15) pour contenir le fluide, ledit espace intermédiaire (14) comprenant un composant statique adapté pour stocker et libérer une quantité déterminée de chaleur afin de permettre un échange de chaleur entre le composant statique et le fluide contenu dans l'espace intérieur (15).

2. Bouteille de condenseur (10) selon la revendication 1, dans laquelle le composant statique comprend un matériau à changement de phase (MCP).

3. Bouteille de condenseur (10) selon la revendication 2, dans laquelle la température de changement de phase du matériau à changement de phase (MCP) est comprise entre 45 et 55°C.

4. Bouteille de condenseur (10) selon l'une des revendications 1 à 3, dans laquelle le composant statique comprend un liquide.

5. Bouteille de condenseur (10) selon l'une des revendications 1 à 4, dans laquelle le composant statique comprend du graphite.

6. Bouteille de condenseur (10) selon l'une des revendications 1 à 5, dans laquelle la paroi extérieure (12) de ladite bouteille de condenseur (10) est pourvue d'une pluralité de nervures (21) adaptées pour augmenter la surface de la paroi extérieure (12) de la bouteille de condenseur (10).

## Patentansprüche

1. Kondensatorflasche (10), welche dafür angepasst ist, um ein in einem Kältekreislauf eines Klimatisierungssystems verwendetes Fluid aufzunehmen und zu enthalten, wobei die Kondensatorflasche (10) eine äußere Wand (12) und eine innere Wand (13) umfasst, wobei die äußere (12) und innere (13) Wand einen Zwischenraum (14) abgrenzen, wobei die innere Wand (13) einen inneren Raum (15) abgrenzt, um das Fluid zu enthalten, wobei der Zwischenraum (15) ein statische Komponente umfasst, welche dafür angepasst ist, um eine bestimmte Wärmemenge zu speichern und freizugeben, um einen Wärmeaustausch zwischen der statischen Komponente und dem in dem inneren Raum (15) enthaltenen Fluid zu ermöglichen.

2. Kondensatorflasche (10) nach Anspruch 1, bei welcher die statische Komponente ein Phasenänderungsmaterial (MCP) umfasst.

3. Kondensatorflasche (10) nach Anspruch 2, bei welcher die Phasenänderungstemperatur des Phasenänderungsmaterials (MCP) zwischen 45 und 55°C liegt.

4. Kondensatorflasche (10) nach einem der Ansprüche 1 bis 3, bei welcher die statische Komponente eine Flüssigkeit ist.

5. Kondensatorflasche (10) nach einem der Ansprüche 1 bis 4, bei welcher die statische Komponente Graphit umfasst.

6. Kondensatorflasche (10) nach einem der Ansprüche 1 bis 5, bei welcher die äußere Wand (12) der Kondensatorflasche (10) mit einer Mehrheit von Rippen (21) versehen ist, welche dafür angepasst sind, um die Oberfläche der äußeren Wand (12) der Kondensatorflasche (10) zu erhöhen.

## Claims

1. Condenser cylinder (10) adapted to receive and contain a fluid used in a cold loop of an air-conditioning system, the condenser cylinder (10) comprising an external wall (12) and an internal wall (13), said external (12) and internal (13) walls defining an intermediate space (14), said internal wall (13) defining an interior space (15) for containing the fluid, said intermediate space (14) comprising a static component adapted to store and release a set quantity of heat in order to allow heat exchange between the static component and the fluid contained in the interior space (15).

2. Condenser cylinder (10) according to Claim 1, in which the static component comprises a phase change material (PCM).

3. Condenser cylinder (10) according to Claim 2, in which the phase change temperature of the phase change material (PCM) is between 45 and 55°C.

4. Condenser cylinder (10) according to one of Claims 1 to 3, in which the static component comprises a liquid.

5. Condenser cylinder (10) according to one of Claims 1 to 4, in which the static component comprises graphite.

6. Condenser cylinder (10) according to one of Claims 1 to 5, in which the external wall (12) of said condenser cylinder (10) is provided with a plurality of ribs (21) adapted to increase the surface area of the external wall (12) of the condenser cylinder (10).
